# EUROPÄISCHE PATENTSCHRIFT

(11) **EP 1 725 624 B1**
(45) Veröffentlichungstag und Bekanntmachung des Hinweises auf die Patenterteilung: **27.08.2008**
(21) Anmeldenummer: 05715651.5
(22) Anmeldetag: 02.03.2005
(51) Int. Cl.: C09D 11/02, C09B 23/00

(54) **DRUCKFARBEN FÜR DEN OFFSET- UND/ODER HOCHDRUCK MIT NIR-ABSORBERN SOWIE IN OFFSET- UND/ODER HOCHDRUCKFARBEN LÖSLICHE NIR- ABSORBER**
PRINTING INKS FOR OFFSET AND/OR HIGH PRINTING CONTAINING NIR ABSORBERS AND NIR ABSORBERS SOLUBLE IN OFFSET AND/OR HIGH PRINTING INKS
ENCRES D'IMPRESSION DESTINEES A L'IMPRESSION OFFSET ET/OU EN RELIEF CONTENANT DES ABSORBEURS DE SPECTRE EN PROCHE INFRAROUGE ET ABSORBEURS DE SPECTRE EN PROCHE INFRAROUGE SOLUBLES DANS DES ENCRES D'IMPRESSION OFFSET ET/OU EN RELIEF

(30) Priorität: 05.03.2004 DE 102004011347
(43) Veröffentlichungstag der Anmeldung: 29.11.2006
(73) Patentinhaber: BASF SE, 67056 Ludwigshafen (DE); Flint Group Germany GmbH, 70469 Stuttgart (DE)
(72) Erfinder: WAGENBLAST, Gerhard, 67157 Wachenheim (DE); REICHELT, Helmut, 67435 Neustadt (DE); BÜSCHEL, Michael, 67067 Ludwigshafen (DE); HAREMZA, Sylke, 69151 Neckargemünd (DE); ERK, Peter, 67227 Frankenthal (DE); FRANK, Erich, 73033 Goeppingen (DE)
(86) Internationale Anmeldenummer: PCT/EP2005/002174
(87) Internationale Veröffentlichungsnummer: WO 2005/085372

(56) Entgegenhaltungen:
- EP-A- 0 468 465
- EP-A- 1 308 485
- EP-A- 1 359 008
- WO-A-03/066338
- PATENT ABSTRACTS OF JAPAN Bd. 018, Nr. 177 (M-1582), 25. März 1994 (1994-03-25) & JP 05 338358 A (KONICA CORP), 21. Dezember 1993 (1993-12-21)

## Beschreibung

Die vorliegende Erfindung betrifft Druckfarben für den Offset- und/oder Hochdruck, welche NIR-Absorber enthalten, und bei denen die Löslichkeit des NIR-Absorbers in der Druckfarbe mindestens 0,1 Gew. % beträgt. In einer besonderen Ausführungsform handelt es sich beim NIR-Absorber um ein Cyanin-Kation mit einem Anion, welches langkettige Alkyl- bzw. Alkylarylgruppen aufweist. Die Erfindung betrifft weiterhin die Verwendung derartiger Druckfarben in Druckverfahren, bei denen die Härtung der Druckfarbe durch Verwendung von IR-Strahlungsquellen unterstützt wird. In einem weiteren Aspekt betrifft die Erfindung einen NIR-Absorber aus einem Cyanin-Kation mit einem Anion, welches langkettige Alkyl- oder Alkylarylgruppen aufweist.

Unter Härtung bzw. Trocknung von Druckfarben versteht der Fachmann den gesamten Komplex von Vorgängen, Reaktionsabläufen und Umwandlungen, die sich bei der Umwandlung der frisch auf den Bedruckstoff aufgebrachten Druckfarbe in einen festen, auf dem Untergrund gut haftenden Film abspielen. Wesentliche Prozesse sind hierbei -bei einem saugenden Bedruckstoff- das Wegschlagen des Lösemittels in den Bedruckstoff, das Verdampfen des Lösemittels, sowie die Vernetzung des Filmes, beispielsweise oxidativ mittels Luftsauerstoff oder radikalisch oder kationisch mittels geeigneter Vernetzer.

Schnellere Härtung ermöglicht schnelleres Drucken und erhöht somit die Wirtschaftlichkeit. Es ist bekannt, die Härtung von Druckfarben auch durch Zuführung von Wärme zu beschleunigen. Hierzu kann beispielsweise der frisch bedruckte Bedruckstoff durch einen Trockenkanal gefahren werden und mit Heißluft und/oder IR-Strahlern erhitzt werden. Diese Vorgehensweise ist insbesondere im Offsetdruck üblich, denn Offsetdruckfarben enthalten sehr hochsiedende Lösemittel, die bei Raumtemperatur praktisch nicht verdampfen. Weit verbreitet ist beispielsweise das sogenannte Heatset-(Rollen)offset-Verfahren. Nähere Einzelheiten dazu sind beispielsweise dem Römpp-Lexikon "Lacke und Druckfarben", Georg Thieme Verlag, Stuttgart, New York 1998, S. 279/280 zu entnehmen.

IR-Strahler emittieren meist breitbandig sowohl im nahen wie im mittleren Infrarot. Als Alternative zur Benutzung von IR-Strahlern ist von EP-A 355 473 oder EP-A1 302 735 die Benutzung von Lasern, insbesondere IR-Lasern zum Erhitzen der Druckschicht vorgeschlagen worden. Gängige IR-Laser emittieren insbesondere im nahen Infrarot. Naturgemäß ist die Härtung der Druckfarbenschicht mit IR-Strahlung umso besser, je höher die Leistungsdichte der Strahlung ist. Von daher sind Laser besonders gut geeignet.

Nachteiligerweise wird die IR-Strahlung aber nicht nur von der Druckfarbe auf dem Bedruckstoff, sondern auch vom Papier absorbiert. Bedeutend als IR-Absorber im Papier ist insbesondere Wasser. Geringe Mengen von Wasser sind immer im Papier enthalten, beispielsweise durch Absorption von Luftfeuchtigkeit. Weiterhin gelangt Wasser auch über das zum Offsetdruck eingesetzte Feuchtmittel in das Papier. Wenn das Papier durch starke Absorption zu stark erhitzt wird und ungleichmäßig austrocknet, kann es unerwünschterweise wellig werden. Diese Problematik ist beispielsweise in EP-A 1 302 735 in den Abschnitten [0010], [0011] und [0012] genauer ausgeführt worden.

Zur Lösung des Problems wurde von EP-A 1 302 735 vorgeschlagen, Strahlungsenergiequellen einzusetzen, welche bei einer Wellenlänge emittieren, die von Wasser im Wesentlichen nicht absorbiert wird. Um dennoch ausreichende Absorption der IR-Strahlung in der Druckfarbenschicht sicher zu stellen, wurde vorgeschlagen, Druckfarben einzusetzen, welche einen Absorber für NIR-Strahlung enthalten. Konkret genannt wurden nur zwei Cyanin-Farbstoffe in Form des Perchlorates bzw. Tetrafluoroborates, eine Amminiumverbindung in Form des Perchlorates sowie ein Ni-Dithiolenkomplex.

Cyanin-Farbstoffe und ihre Herstellung sind prinzipiell bekannt, beispielsweise aus DE-A 37 21 850, und sie sind für verschiedenste Anwendungen vorgeschlagen worden, beispielsweise für fotografische Materialien (US 5, 013, 642, EP-A 342 576, EP-A 445 627), Farbbänder (DE 43 08 635) oder Druckplatten (WO 03/66338). Cyanin-Farbstoffe sind kommerziell erhältlich.

Cyanin-Farbstoffe bestehen aus einem Cyanin-Kation und einem entsprechenden Anion. Hierbei kann es sich um ein separat vorliegendes Anion handeln, oder aber auch um ein inneres Anion, d.h. dass die anionische Gruppe chemisch mit dem Cyanin-Kation verbunden ist. Sie fallen bei Ihrer Herstellung üblicherweise als einfache Salze, beispielsweise als Halogenide, Tetrafluoroborate, Perchlorate oder Tosylate an. Cyanin-Farbstoffe mit Anionen, welche langkettige Alkyl- oder alkylsubstituierte Arylgruppen aufweisen, sind bislang nicht bekannt.

Die Verwendung der besagten, einfachen Salze in Offsetdruckfarben führt jedoch zu Problemen. Rührt man die NIR-Absorber in einer ausreichenden Menge den Druckfarben unter, so verändert sich der Farbton der Offsetdruckfarbe. Dieser Effekt ist höchst unerwünscht, denn die Farbwerte eines Satzes von Druckfarben Gelb, Cyan, Magenta und Schwarz für den hochwertigen Vierfarbdruck sind mit hoher Präzision aufeinander abgestimmt und mittels internationaler Normen festgelegt. Schon kleinste Abweichungen von den Norm-Farbwerten sind beim hochwertigen Offsetdruck nicht mehr akzeptabel. Am stärksten macht sich diese Veränderung des Farbtons bei Gelb bemerkbar, welches sich beim Zusatz derartiger NIR-Absorber abtrübt und einen bräunlichgrünlichen Farbstich bekommt. Ein derartiges Gelb ist völlig unbrauchbar.

Die Veränderung der Farbtöne scheint zumindest teilweise von einer unzureichenden Löslichkeit der Farbstoffe in den Ofifsetdruckfarben hervorgerufen zu werden. Die Löslichkeit üblicher Cyanin-Farbstoffe in den unpolaren, viskosen Lösemitteln, welche für Offset- und Hochdruckfarben verwendet werden, beträgt in der Regel weniger als 0,1 %.

Aufgabe der Erfindung war es daher, verbesserte Druckfarben für den Offset- und/oder Hochdruck bereitzustellen, welche NIR-Absorber enthalten, und bei denen die Nachteile des Standes der Technik nicht beobachtet werden. Aufgabe war es weiterhin, zur Herstellung der Druckfarben für den Offset- und/oder Hochdruck geeignete NIR-Absorber bereitzustellen, welche den Druckfarben untergerührt werden können und dabei in der Druckfarbe zu einer ausreichend hohen Extinktion bei bestimmten, lasertypischen Wellenlängen führen, ohne dass es zu einer wesentlichen Beeinträchtigung der Farbwerte der Druckfarbe kommt.

Dementsprechend wurden Offsetdruckfarben gefunden, welche NIR-Absorber enthalten und die Löslichkeit des NIR-Absorbers in der Farbe mindestens 0,1 Gew. % beträgt, wobei die Löslichkeit des NIR-Absorbers größer oder gleich der jeweiligen Konzentration des NIR-Absorbers in der Druckfarbe ist.

In einer bevorzugten Ausführungsform der Erfindung handelt es sich bei dem NIR-Absorber um einen ionisch aufgebauten Absorber aus einem Cyanin-Kation X⁺ und einem entsprechenden Anion ¹/mYm⁻ handelt, wobei das Cyanin-Kation eine allgemeine Formel (I) oder (II) aufweist 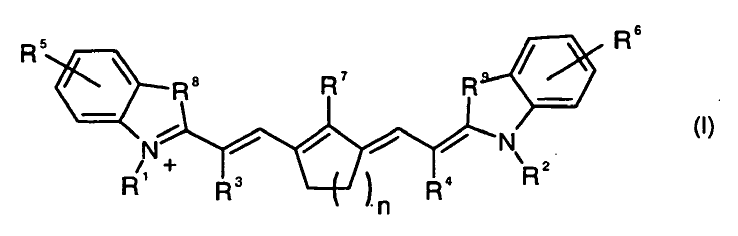 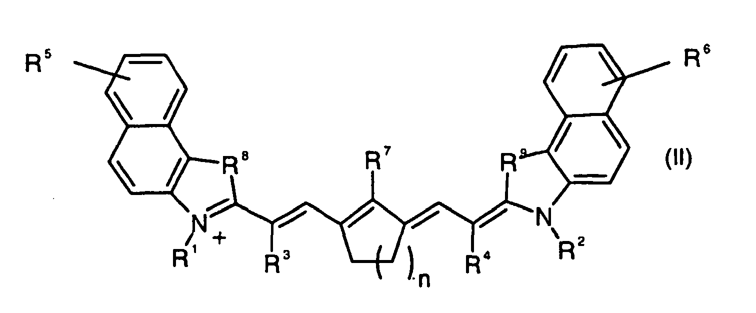 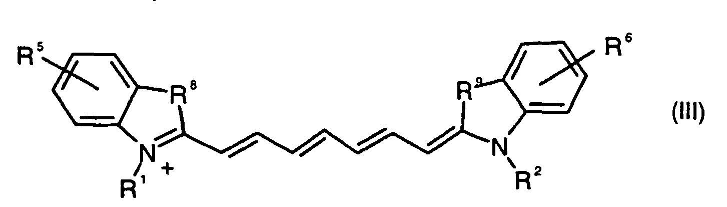 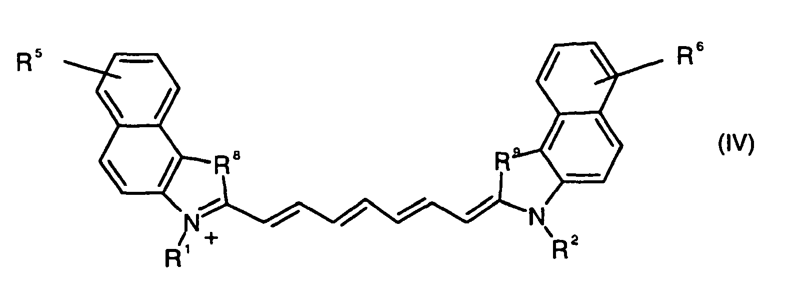 n für 1 oder 2 steht und die Reste R¹ bis R⁹ das Folgende bedeuten:
- R¹ und R² unabhängig voneinander einen linearen oder verzweigten, optional weiter substituierten Alkyl- oder Aralkylrest mit 1 bis 20 C-Atomen,
- R³ und R⁴ unabhängig voneinander H oder CN,
- R⁵ und R⁶ unabhängig voneinander einen oder mehrere, gleichartige oder verschiedenartige Substituenten ausgewählt aus der Gruppe von -H, -F, -CI, -Br, -I, - NO₂, -CN, -CF₃, -R¹ -OR¹, Aryl- oder -O-Aryl,
- R⁷ -H, -CI, -Br, -I, -Phenyl, -O-Phenyl, - S-Phenyl, -N(Phenyl)₂, -Pyridyl, ein Barbitursäure- oder ein Dimedonrest, wobei die Phenylreste auch noch weiter substituiert sein können,
- R⁸ und R⁹ unabhängig voneinander >C(CH₃)₂, -O-, -S-, > NR¹ oder -CH=CH-,
   und wobei das Anion Y^{m-} die allgemeine Formel [AR¹⁰ₖ]^{m-} mit einer polaren, ionischen Kopfgruppe A sowie k unpolaren Gruppen R¹⁰ aufweist, k für eine Zahl von 1, 2 oder 3 und m für 1 oder 2 steht, und die unpolaren Gruppen R¹⁰ unabhängig voneinander ausgewählt werden aus der Gruppe von
- linearen, verzweigten oder cyclischen Alkylgruppen mit 6 bis 30 C-Atomen, sowie
- Alkylarylgruppen der allgemeinen Formel -Aryl-R¹¹, wobei es sich bei R¹¹um lineare oder verzweigte Alkylgruppen mit 3 bis 30 C-Atomen handelt,
oder es sich bei dem Anion Y^{m-} um ein Borat-Anion der allgemeinen Formeln (V) oder (VI) 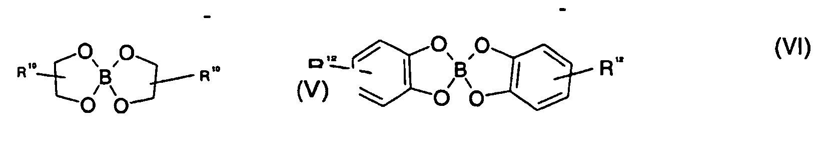 handelt, wobei R¹⁰wie oben definiert ist und es sich bei R¹² um mindestens einen Substituenten ausgewählt aus der Gruppe von H oder linearen, cyclischen oder verzweigte Alkygruppen mit 1 bis 20 C-Atomen handelt, und
wobei in den Resten R¹⁰, R¹¹ und R¹² auch nicht benachbarte C-Atome optional durch O-Atome substituiert sein können und/oder die Reste R¹⁰, R¹¹ und R¹² ganz oder teilweise fluoriert sein können, mit der Maßgabe, dass der unpolare Charakter der Gruppen dadurch nicht wesentlich beeinflusst wird.

Weiterhin wurden neuartige NIR-Absorber der geschilderten Art gefunden.

Zu der Erfindung ist im Einzelnen das Folgende auszuführen:

Die erfindungsgemäßen Offsetdruckfarben umfassen in prinzipiell bekannter Art und Weise mindestens ein unpolares Lösemittel, ein Bindemittel sowie ein im sichtbaren Spektralbereich absorbierendes Farbmittel. Darüber können optional übliche Zusatzstoffe oder Additive enthalten sein.

Die Begriffe "Offsetdruckfarbe" und "Hochdruckfarbe" sind selbsterklärend und beschränkend zugleich. Hochdruckfarben sind auch unter der Bezeichnung Buchdruckfarben bekannt. Bei Offset- und Hochdruckfarben handelt es sich jeweils um pastöse Druckfarben, welche hochsiedende, unpolare Lösemittel, in der Regel mit einem Siedepunkt von ca. 200°C bis ca. 320°C umfassen. Die allgemeinen Prinzipien der Formulierung von Offset- und Hochdruckfarben sind dem Fachmann bekannt und beispielsweise Nachschlagewerken wie Römpp-Lexikon "Lacke und Druckfarben", Georg Thieme Verlag, Stuttgart, New York 1998*,* oder Leach, Robert H.; Pierce, Ray J. "The Printing Ink Manual ; 5th Ed. - London, Blueprint, 1993 zu entnehmen.

Bei den erfindungsgemäßen Druckfarben kann es sich prinzipiell um alle Arten von Offset- und oder Hochdruckfarben handeln. Bevorzugt handelt es sich aber um eine Heatset-Offsetdruckfarbe.

Die erfindungsgemäße Druckfarbe umfasst in prinzipiell bekannter Art und Weise mindestens ein unpolares, hochsiedendes Lösemittel. Selbstverständlich können auch Gemische verschiedener Lösemittel eingesetzt werden, vorausgesetzt die Eigenschaften der Druckfarbe werden dadurch nicht negativ beeinträchtigt. Beispiele geeigneter Lösemittel umfassen Mineralöle, insbesondere aromatenarme Mineralöle. Der Siedepunkt des Mineralöls richtet sich nach dem gewünschten Anwendungszweck und wird vom Fachmann entsprechend gewählt. Für Heatset-Offsetdruck empfiehlt sich im allgemeinen ein Siedepunkt von ca. 200°C bis ca. 270°C, für Coldset-Offsetdruck und Hochdruck ein Siedepunkt von ca. 240°C bis 320°C. Weitere Beispiele umfassen pflanzliche, halbtrocknende oder trocknende Öle, wie beispielsweise Sojaöl, Holzöl, Tallöl oder Leinöl. Derartige Öle eignen sich insbesondere für Bogenoffset- und Hochdruckfarben. Sie werden bevorzugt im Gemisch mit Mineralölen eingesetzt.

Der Fachmann trifft unter den Lösemitteln je nach den gewünschten Eigenschaften der Druckfarbe eine geeignete Auswahl. Gleiches gilt für die Menge des eingesetzten Lösemittels. Bewährt haben sich insbesondere Mengen von 5 bis 45 Gew. % an Lösemittel bezogen auf die Menge aller Komponenten der Druckfarbe, ohne dass die Erfindung darauf beschränkt sein soll.

Die erfindungsgemäßen Druckfarben umfassen weiterhin in prinzipiell bekannter Art und Weise mindestens ein Bindemittel. Bevorzugt werden Gemische verschiedener Bindemittel eingesetzt, beispielsweise Mischungen aus Hartharzen und Weichharzen. Es können die üblichen, für Offset- und Hochdruckfarben typischen Bindemittel eingesetzt werden. Beispiele geeigneter Bindemittel umfassen Alkydharze, Naturharze wie Kolophoniumharze, welche auch noch modifiziert sein können, wie beispielsweise phenol- oder maleinatmodifizierte Kolophoniumharze oder synthetische Harze wie beispielsweise Cumaron-, Inden- oder Cyclopentadienharze. Bewährt haben sich je nach Anwendung Mengen von ca. 20 bis 70 Gew. %, bezogen auf die Menge aller Komponenten der Druckfarbe, ohne dass die Erfindung darauf beschränkt sein soll. Der Fachmann wählt Art und Menge des Bindemittels je nach den gewünschten Eigenschaften der Druckfarbe geeignet aus.
Die erfindungsgemäße Druckfarbe umfasst weiterhin im sichtbaren Spektralbereich absorbierende Farbmittel. Eingesetzt werden können die üblichen, für Offset- und Hochdruckfarben bekannten Farbmittel, insbesondere übliche Pigmente. Beispiele sind anorganische Pigmente wie beispielsweise Titandioxid-Pigmente oder Eisenoxidpigmente, Interferenzpigmente, Ruße, sowie organische Pigmente wie Azo-, Phthalocyanin oder Isoindolin-Pigmente. Bei den Farbmitteln kann es sich auch um lösliche organische Farbstoffe handeln. Es können selbstverständlich auch Gemische verschiedener Farbmittel eingesetzt werden. Die Menge an Farbmittel beträgt üblicherweise 5 - 25 Gew. % bezüglich der Summe aller Bestandteile der Druckfarbe.

Die erfindungsgemäßen Druckfarben können optional in prinzipiell bekannter Art und Weise einen oder mehrere Hilfsstoffe beziehungsweise Additive umfassen. Beispiele für Additive und Hilfsstoffe sind Füllstoffe wie Calciumcarbonat, Aluminiumoxidhydrat oder Aluminium- bzw. Magnesiumsilikat. Wachse erhöhen die Abriebfestigkeit und dienen der Erhöhung der Gleitfähigkeit. Beispiele sind insbesondere Polyethylenwachse, oxidierte Polyethylenwachse, Petroleumwachse oder Ceresinwachse. Fettsäureamide können zur Erhöhung der Oberflächenglätte eingesetzt werden. Zum Dispergieren der Pigmente können Dispergierhilfsmittel eingesetzt werden. Co- oder Mn-Salze, sogenannte Trockner, können zur Beschleunigung oxidativer Härtung eingesetzt werden. Die Gesamtmenge aller Additive und Hilfsstoffe übersteigt üblicherweise nicht 20 Gew. % bezüglich der Summe aller Bestandteile und beträgt bevorzugt 0,1 -10 Gew. %.

Erfindungsgemäß umfassen die Druckfarben für den Hoch- und/oder Offsetdruck weiterhin mindestens einen NIR-Absorber, der im sichtbaren Spektralbereich im Wesentlichen keine Absorption aufweist. Selbstverständlich können auch Gemische mehrerer verschiedener NIR-Absorber eingesetzt werden.

NIR-Absorber werden vom Fachmann auch als NIR-Farbstoffe oder noch allgemeiner als IR-Farbstoffe bezeichnet. Derartige Farbstoffe bzw. Absorber weisen Absorptionsmaxima im Spektralbereich von 700 nm bis 3000 nm, bevorzugt 750 nm bis 2000 nm und besonders bevorzugt 780 nm bis 1500 nm auf.

Der Begriff "im Wesentlichen keine Absorption im sichtbaren Spektralbereich" im Sinne dieser Erfindung soll bedeuten, dass der Absorber im Idealfalle im sichtbaren Spektralbereich keinerlei Absorption aufweisen sollte. Es ist für die Zwecke dieser Erfindung aber ausreichend, dass die Absorption des NIR-Absorbers -bei den gewählten Mengen- im sichtbaren Spektralbereich so gering ist, dass der Farbeindruck der Druckfarbe nicht negativ beeinflusst wird. Naturgemäß hängt dies auch vom Farbton und von der Farbstärke der jeweiligen Druckfarbe ab. Ein NIR-Absorber, der für eine Druckfarbe mit einem ganz bestimmten Farbton und einer ganz bestimmten Farbstärke nicht mehr geeignet ist, kann u.U. für eine andere Druckfarbe mit anderem Farbton und anderer Farbstärke durchaus noch geeignet sein.

Erfindungsgemäß beträgt Löslichkeit des NIR-Absorbers in der Druckfarbe mindestens 0,1 Gew. % bezüglich der Summe aller Komponenten der Farbe mit der Maßgabe, dass die Löslichkeit des NIR-Absorbers größer oder gleich der Konzentration des NIR-Absorbers in der Druckfarbe ist.

Mit anderen Worten gesagt muss erfindungsgemäß gewährleistet sein, dass zugegebener IR-Absorber vollständig in der Druckfarbe gelöst ist. Je höher die zugesetzte Menge des NIR-Absorbers, desto größer muss dementsprechend auch die Löslichkeit des zugegebenen NIR-Absorbers sein. Je nach der gewünschten Menge an IR-Absorber trifft der Fachmann unter den prinzipiell möglichen NIR-Absorbern unter besonderer Berücksichtigung von deren Löslichkeit eine geeignete Auswahl. Die Löslichkeit kann selbstverständlich auch von der Druckfarbe abhängen. Ein NIR-Absorber, der in einer bestimmten Druckfarbe nicht ausreichend löslich ist, kann in einer anderen eine ausreichende Löslichkeit aufweisen.

Die Art und Menge des in der erfindungsgemäßen. Druckfarbe enthaltenen NIR-Absorbers wird vom Fachmann so gewählt, dass eine ausreichende Absorption bei der gewünschten Laserwellenlänge erreicht wird. Im Regelfalle ist eine Menge von weniger als 5 Gew. % ausreichend. Insbesondere bewährt hat sich eine Menge von 0,05 bis 4 Gew. % bezüglich der Summe aller Komponenten der Druckfarbe, bevorzugt 0,1 bis 3 Gew. %, besonders bevorzugt 0,2 bis 2,5 Gew. % und ganz besonders bevorzugt 0,3 bis 2,0 Gew. %.

Bevorzugt beträgt die Löslichkeit des NIR-Absorbers in der Druckfarbe mindestens 0,2 Gew. %, besonders bevorzugt mindestens 0,5 Gew. %, ganz besonders bevorzugt mindestens 1,0 Gew. % und beispielsweise mindestens 2 Gew. %.

Im Regelfalle ist es empfehlenswert, die Menge an zugesetztem NIR-Absorber nicht bis zur Löslichkeitsgrenze zu steigern, sondern einen gewissen Abstand zur Löslichkeitsgrenze zu halten.

Es können beliebige NIR-Absorber vom Fachmann zur Herstellung der Druckfarbe eingesetzt werden, vorausgesetzt, der NIR-Absorber weist die erforderliche Löslichkeit auf. Bevorzugt handelt es sich bei dem NIR-Absorber aber um mindestens einen, ausgewählt aus der Gruppe der Cyanine, Naphthalocyanine, Squaraine und Croconate.

In einer besonders bevorzugten Ausführungsform der Erfindung handelt es sich bei dem NIR-Absorber um einen ionisch aufgebauten Absorber aus einem Cyanin-Kation X⁺ und einem entsprechenden Anion ¹/ₘ Y^{m-}, wobei m insbesondere die Werte 1 oder 2 annehmen kann.

Das Cyanin-Kation gemäß der Erfindung weist eine allgemeine Formel ausgewählt aus den folgenden Formeln (I) bis (IV) auf:

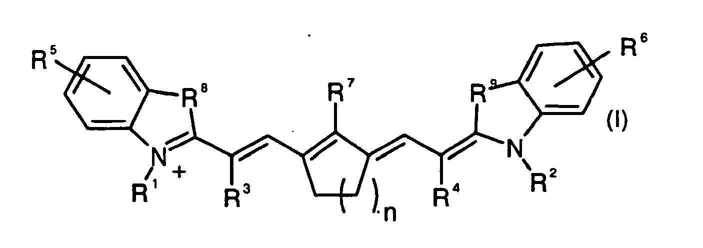

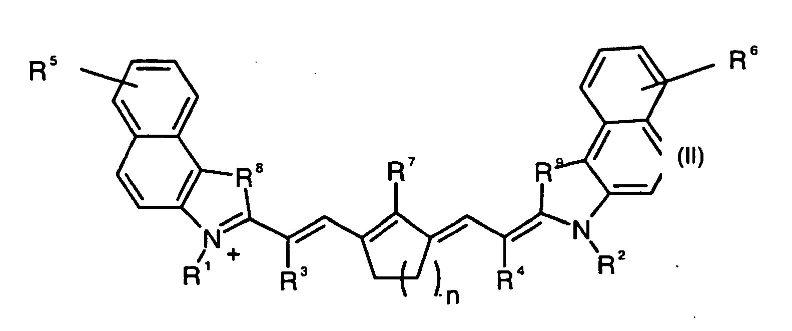

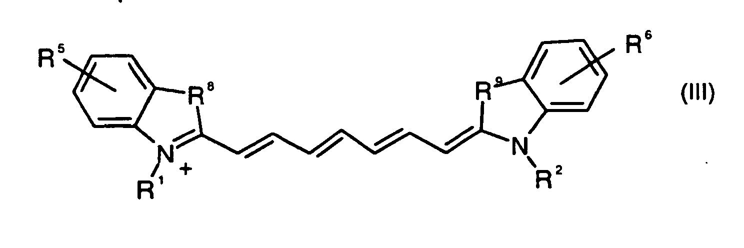

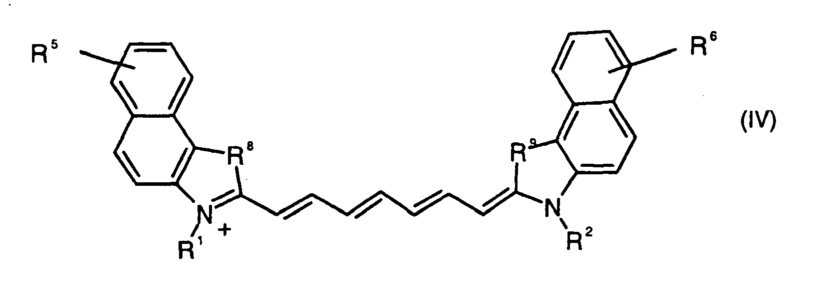

Hierbei steht n für 1 oder 2, und die Reste R¹ bis R⁹ haben die folgende Bedeutung:
R¹ und R² stehen unabhängig voneinander einen linearen oder verzweigten Alkyl- oder Aralkylrest mit 1 bis 20 C-Atomen. Beispiele umfassen Methyl-, Ethyl, 1-Propyl-, 2-Propyl-, 1-Butyl-, 2-Butyl-, t-Butyl-, 1-Pentyl-, 1-Hexyl-, 2-Ethyl-1-hexyl-, 1-Octyl-, 1-Decyl oder 1-Dodecylgruppen. Insbesondere handelt es sich um lineare Alkylgruppen. Bevorzugt sind als Reste Methyl-, Ethyl-, 1-Butyl- oder 1-Dodecylgruppen. Bei Aralkylgruppen handelt es sich in prinzipiell bekannter Art und Weise um mit Arylgruppen substituierte Alkylgruppen. Beispiele umfassen eine Benzyl- oder Phenylethylgruppe. R¹ und R² können gleichartig oder verschieden voneinander sein. Bevorzugt handelt es sich bei R¹ und R² um gleichartige Reste.

R¹ und R² können optional weiter substituiert sein. Insbesondere zu nennen sind hier funktionelle Gruppen wie beispielsweise Amino- oder Hydroxygruppen. Falls vorhanden, kann es sich insbesondere um an Alkylgruppen endständig angeordnete funktionelle Gruppen handeln.

R³ und R⁴ stehen unabhängig voneinander für -H oder -CN. Bevorzugt handelt es sich bei R³ und R⁴ um die gleiche Gruppe.

Bei den Resten R⁵ und R⁶ handelt es sich um verschiedenartige oder bevorzugt gleichartige Reste ausgewählt aus der Gruppe von -H, -F, -CI, -Br, -I, -NO₂ -CN oder -CF₃. Es kann sich bei R⁵ und R⁶ auch um einen Rest -R' oder -OR¹ handeln, wobei R¹ jeweils die oben dargestellte Bedeutung hat. Weiterhin kann es sich um Aryl- oder -O-Aryl-Reste handeln, wobei Aryl bevorzugt ein Phenylrest ist. Bevorzugt handelt es sich bei R⁵ und R⁶ um -H, -CI, -Br oder -I oder um einen Alkylrest. Die endständigen Ringe können jeweils auch mehrere gleichartige oder verschiedenartige Substituenten R⁵ bzw. R⁶ an verschiedenen Positionen des Ringes aufweisen. Bevorzugt sind an jedem Ring nicht mehr als zwei Substituenten, besonders bevorzugt nur jeweils einer vorhanden.

Bei R⁷ kann es sich um -H, -CI, -Br, -I, -Phenyl, -O-Phenyl, - S-Phenyl, -N(Phenyl)₂, -Pyridyl, einen Barbitursäure- oder einen Dimedonrest handeln, wobei die Phenylreste auch noch weiter substituiert sein können. Bei weiteren Substituenten kann es sich beispielsweise um geradkettige oder verzweigte Alkylreste, beispielsweise um Methyl-oder Ethylreste handeln, oder auch um -F, -CI, -Br, -I, -NO_{2,} -CN oder -CF₃.

Bei den Resten R⁸ und R⁹ handelt es sich um verschiedenartige oder bevorzugt gleichartige Reste ausgewählt aus der Gruppe von >C(CH₃)₂, -O-, -S-, > NR¹ oder - CH=CH-. Besonders bevorzugt handelt es sich um >C(CH₃)₂.

Das Gegenion Y^{m-} zum Cyaninkation kann die allgemeine Formel [AR¹⁰ₖ]^{m-} aufweisen. Es umfasst eine polare, ionische Kopfgruppe A sowie k unpolare Gruppen R¹⁰, wobei k für eine Zahl von 1, 2 oder 3 und m für 1 oder 2 steht. Bevorzugt weist das Anion nur eine Gruppe R¹⁰ auf. Weiterhin bevorzugt handelt es sich um einwertiges Anion. Sofern mehrere unpolare Gruppen R¹⁰ im Anion vorhanden sind, können sie unterschiedlich oder bevorzugt gleichartig sein. Selbstverständlich kann es sich auch um ein Gemisch mehrerer unterschiedlicher Anionen handeln.

Bei den Gruppen R¹⁰ kann es sich um lineare, verzweigte oder cyclische Alkylgruppen mit 6 bis 30 C-Atomen handeln. Bevorzugt weisen die Alkylgruppen R¹⁰ 6 bis 12 C-Atome auf. Beispiele geeigneter Gruppen umfassen 1-Hexyl-, Cyclohexyl-, 2-Ethyl-1-hexyl-, 1-Octyl-, 1-Nonyl, 1-Decyl, 1-Undecyl, 1-Dodecyl- oder 1-Tetradecylgruppen. Bevorzugt handelt es sich um lineare Alkylgruppen.

Weiterhin kann es sich um Alkylarylgruppen der allgemeinen Formel -Aryl-R¹¹ handeln, wobei es sich bei wobei es sich bei R¹¹ um lineare oder verzweigte Alkylgruppe mit 3 bis 30 C-Atomen handelt. Beispiele geeigneter Gruppen umfassen 1- Propyl-, 2-Propyl-, 1-Butyl-, 2-Butyl-, t-Butyl-, 1-Pentyl, 1-Hexyl-, Cyclohexyl-, 2-Ethyl-1-hexyl-, 1-Octyl-, 1-Nonyl, 1-Decyl, 1-Undecyl, 1-Dodecyl- oder 1-Tetradecylgruppen. Bevorzugt weisen die Alkylgruppen R¹¹ 6 bis 12 C-Atome auf. Besonders bevorzugt handelt es sich um lineare Alkylgruppen. Bei der Aryleinheit handelt es sich insbesondere um eine Phenylengruppe, bevorzugt um eine 1,4-Phenylengruppe. Beispiele geeigneter Alkylarylgruppen umfassen -(C₆H₄)-C₃H₇, -(C₆H₄)-C₆H₁₃ oder -(C₆H₄)-C₁₂H₂₅.

Bei der polaren ionischen Kopfgruppe A handelt es sich insbesondere um das Anion eines ein- oder zweiwertigen Säurerestes. Es kann sich dabei um eine beliebige anorganische oder organische Säuregruppe handeln. Bevorzugt handelt es sich um eine Carboxylgruppe, oder um S-, P- oder B-haltige Säuregruppen. Beispielsweise kann es sich um eine Säuregruppe ausgewählt aus der Gruppe von -SO₃⁻, -OSO₃⁻, -COO', - PO₃²⁻, -OPO₃²⁻ oder (-O)(-O)PO₂⁻ handeln.

Beispiele besonders geeigneter Anionen umfassen Alkylsulfonate mit Alkylresten, insbesondere linearen Alkylresten aus 6 bis 12 C-Atomen wie beispielsweise n-Octylsulfonat, n-Decylsulfonat oder n-Dodecylsulfonat sowie 4-Alkylbenzolsulfonate mit Alkylresten aus 6 bis 12 C-Atomen wie beispielsweise 4-Hexylbenzolsulfonat, 4-Octylbenzolsulfonat, 4-Decylbenzolsulfonat oder 4-Dodecylbenzolsulfonat. Hierbei kann es sich in prinzipiell bekannter Art und Weise auch um technische Produkte handeln, welche eine Verteilung verschiedener Alkylreste unterschiedlicher Länge aufweisen.

Bei dem Gegenion Y^{m-} für das Cyanin-Kation kann es sich auch um ein Borat-Anion der allgemeinen Formeln (V) oder (VI) handeln

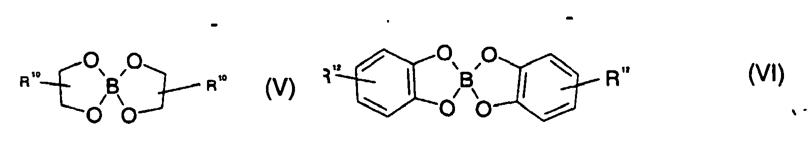

Bei R¹⁰ handelt es sich um einen Rest wie oben definiert. Es können jeweils ein oder zwei gleichartige oder verschiedene Substituenten an jedem der Chelatliganden vorhanden sein. Bevorzugt ist jeweils ein Substituent vorhanden. Bei R¹² handelt es sich jeweils um einen oder mehrere gleichartige oder verschiedene Substituenten ausgewählt aus der Gruppe von H oder linearen, cyclischen oder verzweigte Alkylgruppen mit 1 bis 20 C-Atomen, bevorzugt um einen Rest mit 2 bis 12 C-Atomen. Bevorzugt ist nur eine Alkylgruppe als Substituent vorhanden. Derartige Borat-Anionen sind beispielsweise aus Borsäure und dem entsprechenden Dialkohol erhältlich.

In den Resten R¹⁰, R¹¹ bzw. R¹² können auch nicht benachbarte C-Atome optional durch O-Atome substituiert sein und/oder die Reste R¹⁰, R¹¹ bzw. R¹² können ganz oder teilweise fluoriert sein, vorausgesetzt, der unpolare Charakter der Gruppen wird dadurch nicht wesentlich verändert.

Die Herstellung der erfindungsgemäßen NIR-Absorber kann mittels verschiedener Methoden erfolgen. Sie können beispielsweise mittels eines zweistufigen Verfahrens hergestellt werden, bei dem man in einem ersten Schritt die Cyaninkationen mit üblichen Anionen wie lodid, Tetrafluoroborat, Perchlorat oder Paratoluolsulfonat synthetisiert. Herstellvorschriften sind dem Fachmann bekannt. Als Beispiel sei auf DE-A 37 21 850, EP-A 627 660 sowie die dort zitierte Literatur verwiesen. NIR-Absorber auf Basis von Cyaninen sind auch kommerziell erhältlich.

In einem zweiten Schritt werden dann die üblichen Anionen gegen die erfindungsgemäßen Anionen Y^{m-} mittels eines geeigneten Verfahrens ausgetauscht.

Dies kann beispielsweise so erfolgen, indem man das Ausgangsmaterial zusammen mit der entsprechenden Säure HₘY in einem mit Wasser nicht mischbaren organischen Lösemittel vorlegt, wobei der Absorber darin nicht löslich sein muss. Geeignet sind insbesondere leichtflüchtige organische Lösemittel mit einer gewissen Polarität. Beispielsweise kann es sich um Dichlormethan handeln. Die organische Lösung bzw. Suspension wird anschließend mit Wasser extrahiert, bis das ursprüngliche Anion vollständig aus der organischen Lösung entfernt ist. Der erfindungsgemäße NIR-Absorber kann durch Entfernen des Lösemittels aus der Lösung erhalten werden.

Die Herstellung kann auch unter Verwendung von sauren lonenaustauscherharzen durchgeführt werden, indem man das Ausgangssalz mit üblichem Anion in einem geeigneten polaren Lösemittel, z.B. einem Alkohol wie Methanol oder Ethanol, löst und die Lösung auf die lonenaustauschersäule gibt. Die Absorber-Kationen werden anschließend mit einer Lösung des gewünschten Anions eluiert. Der lonenaustausch kann auch in Anlehnung an das von WO 03/76518 offenbarte Verfahren erfolgen.

Die erfindungsgemäßen NIR-Absorber sind in Offsetdruckfarben gut löslich. Die Löslichkeit kann durch die Wahl des Anions und der Substituenten am Kation beeinflusst werden. Längere Alkylketten als Gruppen R¹⁰, R¹¹ bzw. R¹² bzw. als Substituenten am Cyanin führen im allgemeinen auch zu besserer Löslichkeit.

Die erfindungsgemäßen NIR-Absorber weisen Absorptionsmaxima im Bereich von 700 nm bis 1200 nm. Bevorzugt sind solche Farbstoffe, die ihr Absorptionsmaximum nahe der Emissionswellenlänge gängiger Laser, insbesondere Halbleiterdiodenlaser aufweisen. Beispiele typischer Laserwellenlängen umfassen 750 nm, 785 nm, 810 nm, 835 nm, 855 nm, 955 nm, 980 nm, bevorzugt 810 nm und 980 nm. Das Absorptionsmaximum des NIR-Absorbers kann vom Fachmann in prinzipiell bekannter Art und Weise durch die Wahl der Substituenten am Cyaninkation beeinflusst werden.

Die erfindungsgemäßen NIR-Absorber weisen -wie bereits eingangs geschildert- im Wesentlichen keine Absorption im sichtbaren Spektralbereich auf. Der Extinktionskoeffizient im Bereich von 400 bis 700 nm ist im allgemeinen kleiner als 20 %, bevorzugt kleiner als 10% und besonders bevorzugt kleiner als 5% des Extinktionskoeffizienten bei der eingestrahlten Laserwellenlänge.

Da die erfindungsgemäßen NIR-Absorber aufgrund ihrer hohen massenspezifischen Extinktionskoeffizienten vorteilhaft nur in geringen Mengen eingesetzt werden müssen, um die gewünschten Effekte zu erzielen, wird der Farbton der Druckfarbe durch den Zusatz der NIR-Absorber nicht oder zumindest im Wesentlichen nicht verändert.

Die Herstellung der erfindungsgemäßen Hoch- bzw. Offsetdruckfarben bietet keinerlei Besonderheiten. Sie kann nach den prinzipiell bekannten Methoden durch intensives Vermischen bzw. Dispergieren der Bestandteile in üblichen Apparaturen wie beispielsweise Dissolvern, Rührwerkskugelmühlen oder einem Dreiwalzenstuhl erfolgen. Die NIR-Absorber können hierbei wie andere Additive im Zuge der Herstellung untergemischt und in der Druckfarbe aufgelöst werden.

Es ist auch möglich, die erfindungsgemäßen NIR-Absorber fertigen, handelsüblichen Offset- oder Hochdruckfarben unterzumischen. Es ist hierbei in aller Regel empfehlenswert, die erfindungsgemäßen Absorber in einer geringen Menge Mineralöl vorzulösen und der Offsetfarbe als Konzentrat zuzugeben.

Mittels der erfindungsgemäßen NIR-Absorber werden Druckfarben erhalten, die eine ausreichende Menge an NIR-Absorber in gelöster Form enthalten, und bei denen dennoch sich der Farbton der Druckfarbe im Vergleich zu dem einer Druckfarbe ohne einen solchen NIR-Absorber nicht oder zumindest im Wesentlichen nicht ändert.

Die Druckfarben können prinzipiell für alle Techniken des Hoch- bzw. Offsetdruckes eingesetzt werden. Sie eignen sich naturgemäß insbesondere für alle Drucktechniken, bei denen die Trocknung der Farbe mittels IR-Stahlung unterstützt wird, insbesondere Heatset-Offsetdruck. Durch den IR-Absorber wird eine sehr schnelle Trocknung der auf den Bedruckstoff aufgebrachten Druckfarbe erreicht.

Bei der zur Trocknung eingesetzten IR-Strahlung kann es sich sowohl um breitbandige Strahlung handeln, es kann sich auch um schmalbandige Strahlung handeln oder um Laserstrahlung mit einer ganz bestimmten Wellenlänge. Als Laser eignen sich insbesondere die bekannten, im NIR-Bereich emittierenden Laser, beispielsweise Halbleiterdiodenlaser oder Festkörperlaser, wie bspw. Nd/YAG-Laser.

Die erfindungsgemäßen Druckfarben eignen sich insbesondere für Druckverfahren, bei denen die Härtung der Druckfarbe durch Verwendung von Strahlungsenergiequellen unterstützt wird, deren Wellenlänge nicht resonant zu Absorptionswellenlängen von Wasser ist. Diese Technik ist insbesondere beim Druck auf Papier, Karton oder dergleichen wertvoll. Hierzu wird bevorzugt eine schmalbandige Strahlungsquelle, insbesondere ein Laser eingesetzt. Dadurch wird vorteilhaft erreicht, dass das im Bedruckstoff enthaltene Wasser -und damit auch der Bedruckstoff selbst- nicht oder zumindest nicht wesentlich erhitzt wird. Negative Effekte, die durch das Erhitzen des Bedruckstoffes hervorgerufen werden können, wie beispielsweise Wellenschlagen oder Verformung des Bedruckstoffes, werden dadurch vermieden. Durch den in der Druckschicht enthaltenen IR-Absorber wird die gedruckte Schicht gleichwohl gezielt erhitzt und härtet somit schneller. Einzelheiten zu dieser Technik sowie dazu notwendigen Apparaturen sind in EP-A 1 302 735, welche als Bestandteil dieser Offenbarung betrachtet werden soll, ausführlich beschrieben. Der Fachmann wählt unter den erfindungsgemäßen NIR-Absorbern diejenigen aus, die bei der jeweils gewünschten Wellenlänge am besten absorbieren.

Die erfindungsgemäßen NIR-Absorber können selbstverständlich nicht nur zur Herstellung von Offset- oder Hochdruckfarben verwendet werden, sondern können auch für andere Anwendungen eingesetzt werden, beispielsweise als gut lösliche IR-Absorber in Lacken, insbesondere Klarlacken oder für IR-Filter.

Die folgenden Beispiele sollen die Erfindung näher erläutern:

### A. Synthese der NIR-Absorber

Die erfindungsgemäßen NIR-Absorber können in einem zweistufigen Verfahren synthetisiert werden. In der ersten Stufe erfolgt die Synthese der Cyanin-Kationen mit üblichen Anionen, wie beispielsweise lodid. Die Synthese ist dem Fachmann prinzipiell bekannt und kann nach literaturbekannten Synthesen durchgeführt werden, z.B. nach den Vorschriften von K. Vankataraman ,,The Chemistry of Synthetic Dyes", Academic Press, New York, 1952, Bd. II und H. Zollinger "Color Chemistry: Synthesis, Properties, and Applications of Organic Dyes and Pigments", Weinheim, Wiley-VCH, 2003.

In einer zweiten Stufe wird das übliche Anion gegen ein erfindungsgemäßes Anion ausgetauscht.

### 1. Stufe Synthese von Cyanin-Kationen mit üblichen Anionen

Nachstehend ist beispielhaft die Synthese des Absorbers 2-[2-[2-[2-(1,3-Dihydro-1-ethyl-3-3-dimethyl-2H-indol-2-yliden)-ethyliden]-1-cyclohexen-1-yl] ethenyl]-1-ethyl-3,3-dimethyl-3H-indolium lodid (A1) beschrieben.

10 g (0.032 mol) 3-Ethyl-1,1,2-trimethylindolium lodid und 2.7 g (0.016 mol) 3-Hydroxymethylen-cyclohex-1-en-carbaldehyd werden in einer Mischung aus 105 ml Butanol und 45 ml Toluol vorgelegt. Es wird auf 110°C aufgeheizt und das entstandene Wasser ausgekreist. Nach fünf Stunden Rühren wird auf Raumtemperatur abgekühlt. Nach dem Einengen der Lösung wird mit Methyl-tertbutylether versetzt. Die entstandenen Kristalle werden abgesaugt und mit Methyl-tertbutylether gewaschen. Es werden 9.4 g Kristalle erhalten und bei 50°C im Vakuum getrocknet (Schmp. 235°C).

In analoger Art und Weise können unter Verwendung entsprechender Ausgangsverbindungen andere Cyanin-Kationen mit üblichen Anionen synthetisiert werden. Die nicht erfindungsgemäßen NIR-Absorber A1 bis A3 sind in Tabelle 1 zusammengestellt.

**Tabelle 1: Synthetisierte nicht erfindungsgemäße NIR-Absorber**

| Verbindung | Struktur | Anion |
|---|---|---|
| A1 | 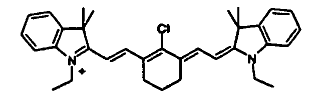 | I- |
| A2 | 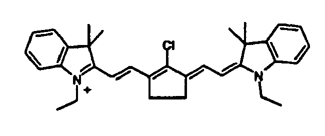 | I- |
| A3 | 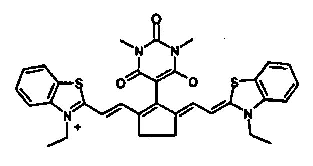 | I- |

### 2. Stufe Allgemeine Vorschrift zur Herstellung erfindungsgemäßer NIR-Absorber durch Austausch des Anions

### 2-[2-[2-[2-(1,3-Dihydro-1-ethyl-3-3-dimethyl-2H-indol-2-yliden)-ethyliden]-1-cyclohexen-1-yl] ethenyl]-1-ethyl-3,3-dimethyl-3H-indolium Dodecylsulfonat (B1)

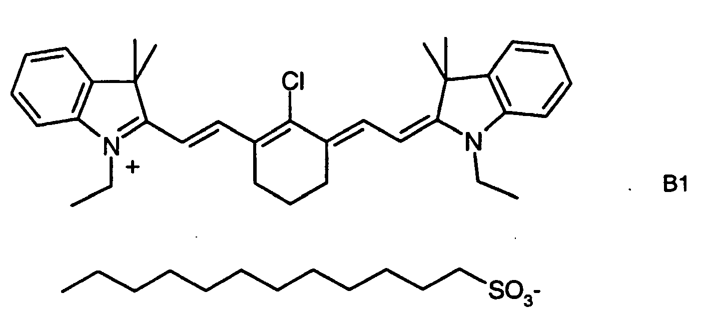

Die Verbindung wurde wie folgt hergestellt: 0.003 mol (1,6 g) des NIR-Absorbers **A1** werden zusammen mit 0,009 mol (2.3 g) Na-Dodecylsulfonat in 50 ml Dichlormethan vorgelegt. Es werden 50 ml Wasser zugegeben, 30 Minuten bei Raumtemperatur gerührt und schließlich die Phasen getrennt. Die organische Phase wird dreimal mit 50 ml Wasser gewaschen, bis im Waschwasser mit Silbernitratlösung kein lodid mehr nachweisbar ist. Nach dem Trocknen der organischen Phase mit Natriumsulfat wird das Lösungsmittel abdestilliert und der Rückstand bei 50°C im Vakuum getrocknet.

In analoger Art und Weise wurden unter Verwendung anderer Cyanin-Kationen sowie entsprechenden Salzen der gewünschten Anionen die folgenden NIR-Absorber hergestellt. Die synthetisierten erfindungsgemäßen NIR-Absorber B1 bis B10 sind in Tabelle 1 zusammengefasst. Zu Vergleichszwecken wurden auch jeweils Proben der korrespondierenden lodide zurückbehalten.

**Tabelle 2: Synthetisierte erfindungsgemäße NIR-Absorber**

| Verbindung | λₘₐₓ [nm] | Cyanin-Kation | Anion |
|---|---|---|---|
| B1 (oben dargestellt) | 786 | 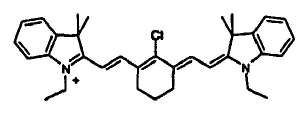 | 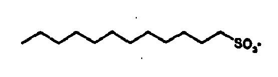 |
| B2 | 786 | 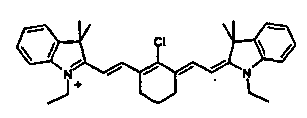 | 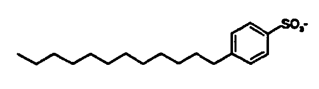 |
| B3 | 810 | 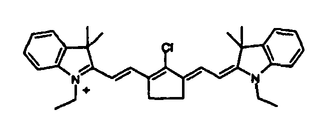 | 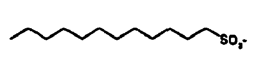 |
| B4 | 810 | 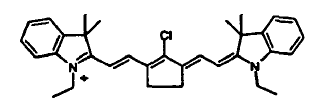 | 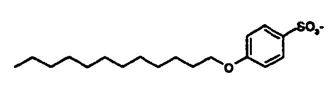 |
| B5 | 832 | 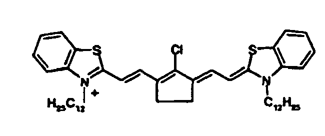 | 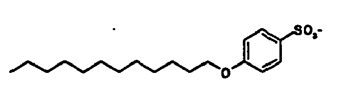 |
| B6 | 810 | 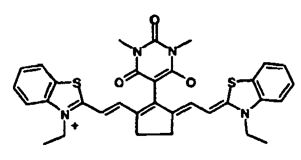 | 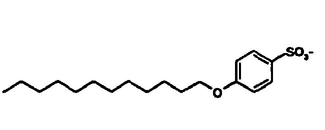 |
| B7 | 762 | 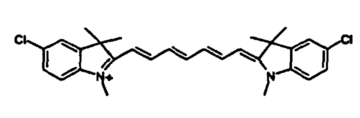 | 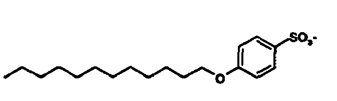 |
| B8 | 823 | 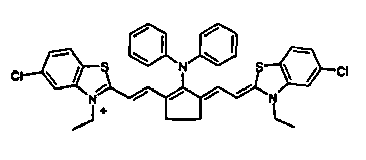 | 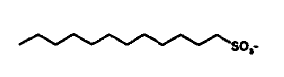 |
| B9 | 676 | 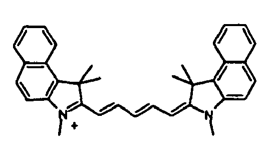 | 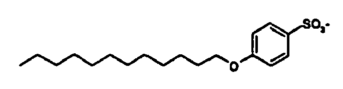 |
| B10 | 768 | 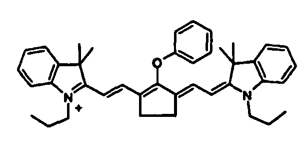 | 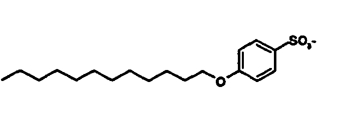 |

### B. Test der erfindungsgemäßen NIR-Absorber in Druckfarben:

Für die Tests wurden zwei übliche Firnisse zur Herstellung von Offsetdruckfarben eingesetzt. Firnisse sind vorgefertigte Zubereitungen aus Bindemittel und Lösemittel, aber noch ohne Farbmittel. Auf diese Art und Weise lässt sich das Verhalten der NIR-Absorber auch spektroskopisch ohne Störung durch das Farbmittel studieren.

Es wurde ein Firniss zur Herstellung von Heatset-Farben aus ca. 45 Gew. % eines aromatenarmen Mineralöls (Siedebereich 240 bis 270°C), ca. 45 Gew. % eines kolophoniummodifizierten Phenolharzes sowie ca. 10 Gew. % eines Alkydharz eingesetzt, sowie ein Firniss zur Herstellung von Bogenoffsetfarben aus ca. 45 Gew. % eines aromatenarmen Mineralöls (Siedebereich 260 bis 290°C), ca. 45 Gew. % eines kolophoniummodifizierten Phenolharzes sowie ca.10 Gew. % Leinöl.

Den Bindemittellösungen wurden jeweils definierte Mengen der NIR-Absorber zugesetzt und mindestens 4 Stunden bei 60°C gerührt. Nach dem Abkühlen der Proben wurde mittels Polarisationsmikroskopie geprüft, ob die resultierenden Flüssigkeiten noch ungelöste Kristalle des NIR-Absorbers enthalten.
Weiterhin wurde von obigen Flüssigkeiten eine dünne Schicht hergestellt und spektroskopisch untersucht. Hierzu wurden die obigen Flüssigkeiten mit Dichlormethan 1:5 verdünnt und die resultierende Lösung auf ein Objektträgerglas gerakelt, so dass nach dem Verdunsten des Dichlormethans eine ca. 2 *µ*m dicke Schicht verblieb. Von dieser Schicht wurde dann nach 2 Stunden ein Absorptionsspektrum (400 -1000 nm) aufgenommen.

### Ergebnis:

Die nicht-erfindungsgemäßen NIR-Absorber A1, A2 und A3 waren in beiden Lösungen praktisch unlöslich (Löslichkeit jeweils <<0,01 Gew.%).

Mit den erfindungsgemäßen NIR-Absorber B1, B2, B3 und B4 wurden hingegen auch mit jeweils mindestens 2 Gew. % des entsprechenden NIR-Absorbers klare Lösungen ohne ungelöste Kristalle erhalten.

Die dünne Schicht des Druckfirnisses mit 1 Gew.-% des NIR-Absorbers ergab im Falle der nicht-erfindungsgemäßen Verbindung A1 eine Extinktion bei 786 nm von E<<0,01, während im Falle der erfindungsgemäßen Verbindung B1 eine Extinktion bei 786 nm von E=0,91 resultierte.

Für die nicht erfindungsgemäße Verbindung A2 (1.0 Gew.-%) ergab sich eine Extinktion E von << 0,01 bei 810 nm, während mit der erfindungsgemäßen Probe B4 (1.0 Gew.-%) eine Extinktion E von 0,83 bei 810 nm.

### Test der NIR-Absorber in gelber Offsetdruckfarbe

### Vergleichsbeispiele:

Zu einer handelsüblichen gelben Offsetdruckfarbe für Heatset wurden jeweils 0,5 Gew. % der nicht erfindungsgemäßen Absorber A1 bzw. A2 gegeben und die Mischungen intensiv gerührt. Die NIR-Absorber lösten sich nicht in der Offsetfarbe, sondern es resultierten Dispersionen.

Proben der erhaltenen Farben wurden auf Papier gedruckt.

Die Druckschicht auf dem Papier wies jeweils im Vergleich zu einer Vergleichsprobe ohne NIR-Absorber keinen reinen gelben, sondern einen bräunlich-grünen Farbton auf.

Die Absorption bei einer Wellenlänge des Laserlichtes von 786 nm bzw. 810 nm ist sehr gering.

### Beispiele:

Es wurde wie im Vergleichsbeispiel vorgegangen, nur wurden jeweils 0,5 Gew. % der erfindungsgemäßen NIR-Absorber B2 bzw. B4 eingesetzt. Die NIR-Absorber B2 bzw. B4 lösten sich jeweils vollständig in der Offsetfarbe.

Die Druckschicht auf dem Papier wies in beiden Fällen einen gelben Farbton auf, der im Vergleich zu einer Probe ohne NIR-Absorber unverändert war.

Die Absorption bei der Wellenlänge des Laserlichtes bei 786 nm bzw. 810 nm war hoch ( > 60%).

## Patentansprüche

1. Druckfarbe für den Hoch- und/oder Offsetdruck umfassend 5 bis 45 Gew. % mindestens eines unpolaren Lösemittels mit einem Siedepunkt von 200 bis 320°C, 20 bis 70 Gew. % Bindemittel, 5 bis 25 Gew. % im sichtbaren Spektralbereich absorbierender Farbmittel sowie einen NIR-Absorber, der im sichtbaren Spektralbereich im Wesentlichen keine Absorption aufweist, **dadurch gekennzeichnet dass** die Löslichkeit des NIR-Absorbers in der Druckfarbe mindestens 0,1 Gew. % bezüglich aller Bestandteile der Druckfarbe beträgt, mit der Maßgabe, dass die Löslichkeit des NIR-Absorbers größer oder gleich der Konzentration des NIR-Absorbers in der Druckfarbe ist.

2. Druckfarbe gemäß Anspruch 1, **dadurch gekennzeichnet, dass** die Löslichkeit des NIR-Absorbers mindestens 0,2 Gew. % beträgt.

3. Druckfarbe gemäß Anspruch 1 oder 2, **dadurch gekennzeichnet, dass** es sich bei dem NIR-Absorber um mindestens einen, ausgewählt aus der Gruppe der Cyanine, Naphthalocyanine, Squaraine und Croconate handelt.

4. Druckfarbe gemäß Anspruch 3, **dadurch gekennzeichnet, dass** es sich bei dem NIR-Absorber um einen ionisch aufgebauten Absorber aus einem Cyanin-Kation X⁺ und einem entsprechenden Anion ¹/ₘ Y^{m-} handelt, wobei das Cyanin-Kation eine allgemeine Formel ausgewählt aus der Gruppe von (I) bis (IV) aufweist 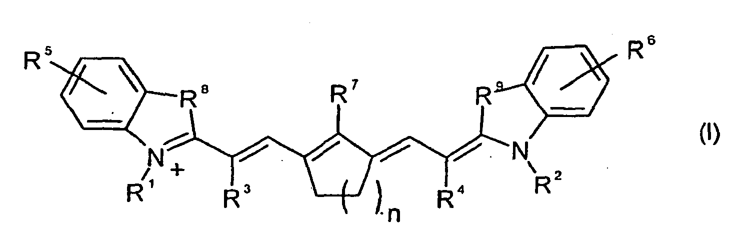 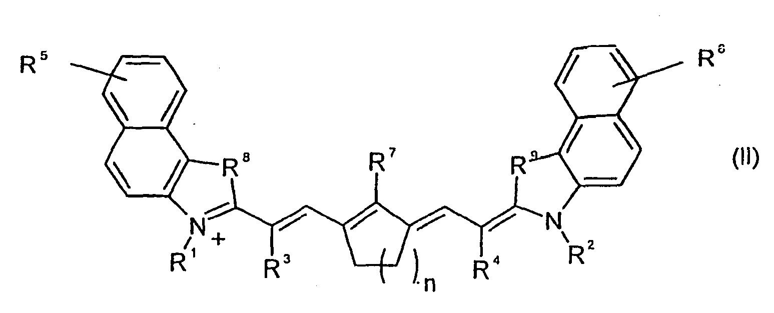 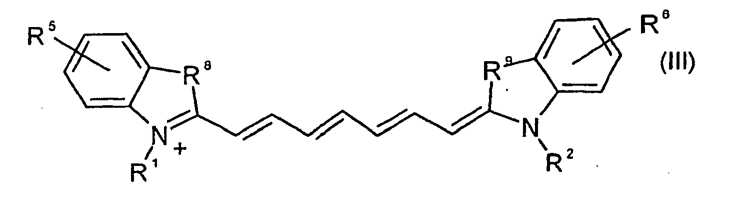 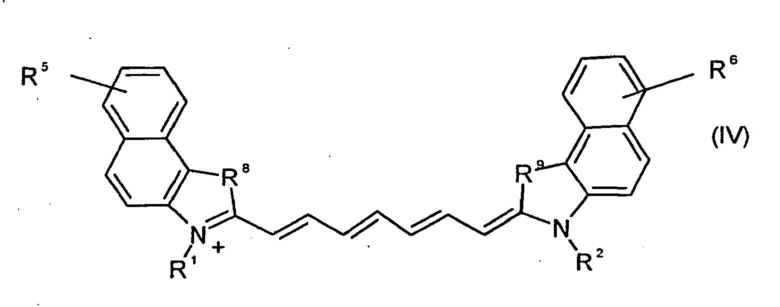 n für 1 oder 2 steht und die Reste R¹ bis R⁹ das Folgende bedeuten:
- R¹ und R² unabhängig voneinander einen linearen oder verzweigten, optional weiter substituierten Alkyl- oder Aralkylrest mit 1 bis 20 C-Atomen,
- R³ und R⁴ unabhängig voneinander H oder CN,
- R⁵ und R⁶ unabhängig voneinander einen oder mehrere, gleichartige oder verschiedenartige Substituenten ausgewählt aus der Gruppe von -H, -F, -Cl, -Br, -I, - NO₂, -CN, -CF₃, -R¹, -OR¹, Aryl- oder -O-Aryl,
- R⁷ -H, -CI, -Br, -I, -Phenyl, -O-Phenyl, - S-Phenyl, -N(Phenyl)₂, -Pyridyl, ein Barbitursäure- oder ein Dimedonrest, wobei die Phenylreste auch noch weiter substituiert sein können,
- R⁸ und R⁹ unabhängig voneinander >C(CH₃)₂, -O-, -S-, > NR¹ oder -CH=CH-,
und wobei das Anion Y^{m-} die allgemeine Formel [AR¹⁰ₖ]^{m-} mit einer polaren, ionischen Kopfgruppe A sowie k unpolaren Gruppen R¹⁰ aufweist, k für eine Zahl von 1, 2 oder 3 und m für 1 oder 2 steht, und die unpolaren Gruppen R¹⁰ unabhängig voneinander ausgewählt werden aus der Gruppe von
o linearen, verzweigten oder cyclischen Alkylgruppen mit 6 bis 30 C-Atomen, sowie
o Alkylarylgruppen der allgemeinen Formel -Aryl-R¹¹, wobei es sich bei R¹¹ um lineare oder verzweigte Alkylgruppen mit 3 bis 30 C-Atomen handelt,
oder es sich bei dem Anion Y^{m-} um ein Borat-Anion der allgemeinen Formeln (V) oder (VI) 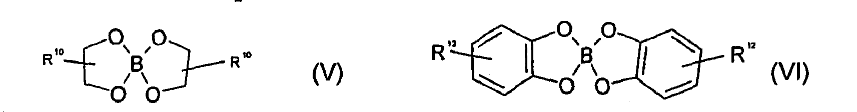 handelt, wobei R¹⁰ wie oben definiert ist und es sich bei R¹² um mindestens einen Substituenten ausgewählt aus der Gruppe von H oder linearen, cyclischen oder verzweigte Alkylgruppen mit 1 bis 20 C-Atomen handelt, und
wobei in den Resten R¹⁰, R¹¹ und R¹² auch nicht benachbarte C-Atome optional durch O-Atome substituiert sein können und/oder die Reste R¹⁰, R¹¹ und R¹² ganz oder teilweise fluoriert sein können, mit der Maßgabe, dass der unpolare Charakter der Gruppen **dadurch** nicht wesentlich beeinflusst wird.

5. Druckfarbe gemäß Anspruch 4, **dadurch gekennzeichnet, dass** es sich bei der polaren, ionischen Kopfgruppe A um einen ein- oder zweiwertigen Säurerest ausgewählt aus der Gruppe von -SO₃⁻, -OSO₃⁻ , -COO⁻, -PO₃²⁻, -OPO₃²⁻ oder (-O)(-O)PO₂⁻ handelt.

6. Druckfarbe gemäß Anspruch 4 oder 5, **dadurch gekennzeichnet, dass** es sich bei R¹⁰ um eine lineare, verzweigte oder cyclische Alkylgruppe mit 6 bis 12 C-Atomen handelt.

7. Druckfarbe gemäß Anspruch 6, **dadurch gekennzeichnet, dass** es sich bei R¹⁰ um eine lineare Alkylgruppe handelt.

8. Druckfarbe gemäß Anspruch 4 oder 5, **dadurch gekennzeichnet, dass** R¹¹ 6 bis 12 C-Atome aufweist.

9. Druckfarbe gemäß Anspruch 8, **dadurch gekennzeichnet, dass** es sich bei R¹¹ um eine lineare Alkylgruppe handelt.

10. Druckfarbe gemäß einem der Ansprüche 1 bis 9, **dadurch gekennzeichnet, dass** die Menge des NIR-Absorbers in der Druckfarbe 0,05 bis 4 Gew. % bzgl. der Summe aller Bestandteile der Farbe beträgt.

11. Verwendung einer Druckfarbe gemäß einem der Ansprüche 1 bis 10 in Druckverfahren, bei denen die Härtung der Druckfarbe durch Verwendung von IR-Strahlungsquellen unterstützt wird, deren Wellenlänge nicht resonant zu den Absorptionswellenlängen von Wasser ist.

12. NIR-Absorber bestehend aus einem Cyaninkation X⁺ und einem entsprechenden Anion ¹/ₘY^{m-}, wobei das Kation eine allgemeine Formel ausgewählt aus der Gruppe von (I) bis (IV) aufweist 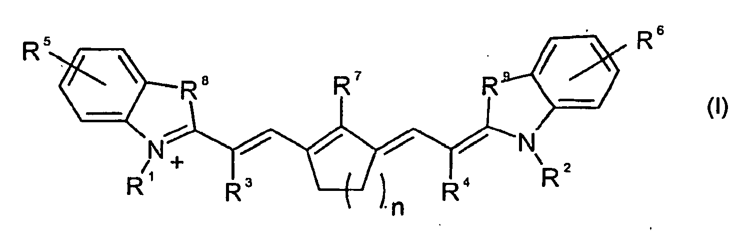 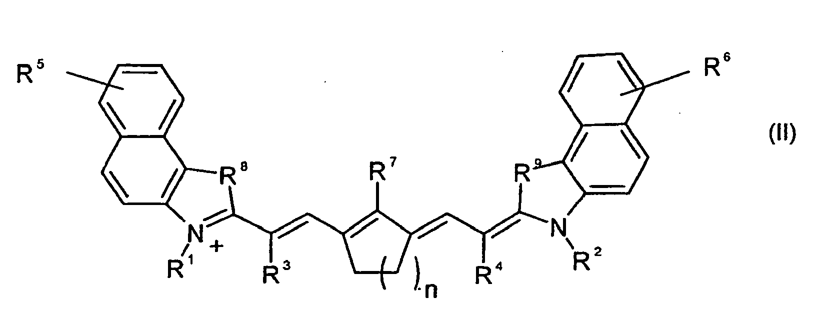 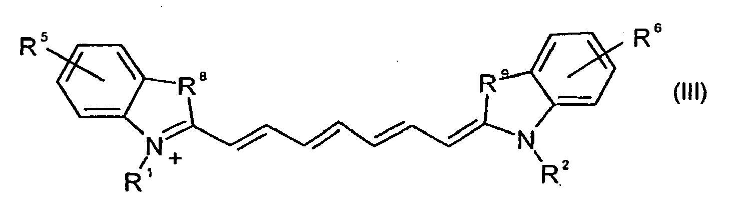 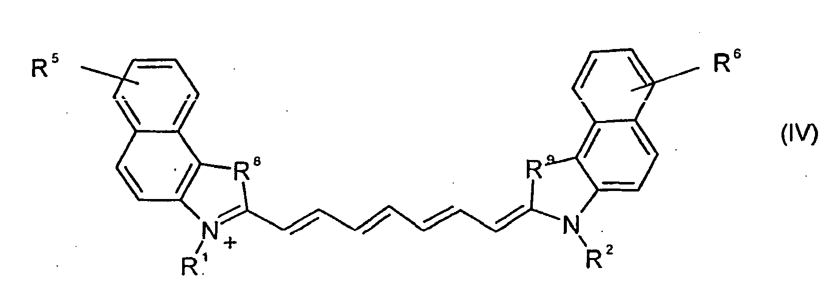 n für 1 oder 2 steht und die Reste R¹ bis R⁹ das Folgende bedeuten:
- R¹ und R² unabhängig voneinander einen linearen oder verzweigten, optional weiter substituierten Alkyl- oder Aralkylrest mit 1 bis 20 C-Atomen,
- R³ und R⁴ unabhängig voneinander H oder CN,
- R⁵ und R⁶ unabhängig voneinander einen oder mehrere, gleichartige oder verschiedenartige Substituenten ausgewählt aus der Gruppe von -H, -F, -Cl, -Br, -I,
- NO₂, -CN, -CF₃, -R¹, -OR¹, Aryl- oder -O-Aryl,
- R⁷-H, -Cl, -Br, -I, -Phenyl, -O-Phenyl, - S-Phenyl, -N(Phenyl)₂, -Pyridyl, ein Barbitursäure- oder ein Dimedonrest, wobei die Phenylreste auch noch weiter substituiert sein können,
- R⁸ und R⁹ unabhängig voneinander >C(CH₃)₂, -O-, -S-, > NR¹ oder -CH=CH-,
und wobei das Anion Y^{m-} die allgemeine Formel [AR¹⁰ₖ]^{m-} mit einer polaren, ionischen Kopfgruppe A sowie k unpolaren Gruppen R¹⁰ aufweist, k für eine Zahl von 1, 2 oder 3 und m für 1 oder 2 steht, und die unpolaren Gruppen R¹⁰ unabhängig voneinander ausgewählt werden aus der Gruppe von
o linearen, verzweigten oder cyclischen Alkylgruppen mit 6 bis 30 C-Atomen, sowie
o Alkylarylgruppen der allgemeinen Formel -Aryl-R¹¹, wobei es sich bei R¹¹ um lineare oder verzweigte Alkylgruppen mit 3 bis 30 C-Atomen handelt,
oder es sich bei dem Anion Y^{m-} um ein Borat-Anion der allgemeinen Formeln (V) oder (VI) 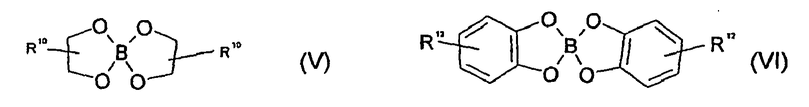 handelt, wobei R¹⁰ wie oben definiert ist und es sich bei R¹² um mindestens einen Substituenten ausgewählt aus des Gruppe von H oder linearen, cyclischen oder verzweigte Alkylgruppen mit 1 bis 20 C-Atomen handelt, und
wobei in den Resten R¹⁰, R¹¹ und R¹² auch nicht benachbarte C-Atome optional durch O-Atome substituiert sein können und/oder die Reste R¹⁰, R¹¹ und R¹² ganz oder teilweise fluoriert sein können, mit der Maßgabe, dass der unpolare Charakter der Gruppen **dadurch** nicht wesentlich beeinflusst wird.

13. NIR-Absorber gemäß Anspruch 12, **dadurch gekennzeichnet, dass** es sich bei dem ein- oder zweiwertigen Säurerest A um einen ausgewählt aus der Gruppe von -SO₃-, -OSO₃⁻, -COO⁻, -PO₃²⁻, -OPO₃²⁻ oder (-O)(-O)PO₂⁻ handelt.

14. NIR-Absorber gemäß Anspruch 12 oder 13, **dadurch gekennzeichnet, dass** es sich bei R¹⁰ um eine lineare oder verzweigte Alkylgruppe mit 6 bis 12 C-Atomen handelt.

15. NIR-Absorber gemäß Anspruch 14, **dadurch gekennzeichnet, dass** es sich bei R¹⁰ um eine lineare Alkylgruppe handelt.

16. NIR-Absorber gemäß Anspruch 12 oder 13, **dadurch gekennzeichnet, dass** R¹¹ 6 bis 12 C-Atome aufweist.

17. NIR-Absorber gemäß Anspruch 16, **dadurch gekennzeichnet, dass** es sich bei R¹¹ um eine lineare Alkylgruppe handelt.

## Claims

1. A printing ink for letterpress and/or offset printing, comprising 5 to 45% by weight of at least one nonpolar solvent with a boiling point of from 200 to 320°C, 20 to 70% by weight of binder, 5 to 25% by weight of colorant absorbing in the visible spectral range and an NIR absorber which has substantially no absorption in the visible spectral range, wherein the solubility of the NIR absorber in the printing ink is at least 0.1% by weight, based on all components of the printing ink, with the proviso that the solubility of the NIR absorber is greater than or equal to the concentration of the NIR absorber in the printing ink.

2. The printing ink according to claim 1, wherein the solubility of the NIR absorber is at least 0.2% by weight.

3. The printing ink according to claim 1 or 2, wherein the NIR absorber is at least one NIR absorber selected from the group consisting of cyanines, naphthalocyanines, squaraines and croconates.

4. The printing ink according to claim 3, wherein the NIR absorber is an ionic absorber comprising a cyanine cation X⁺ and a corresponding anion ¹/ₘY^{m-}, the cyanine cation having a general formula selected from the group consisting of (I) to (IV) 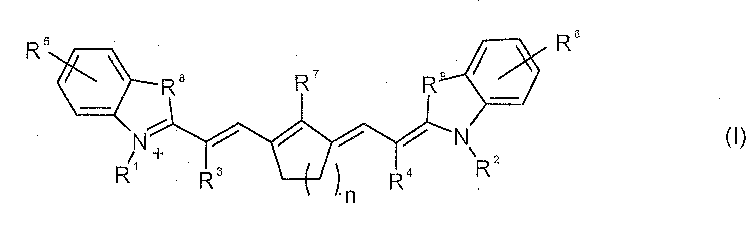 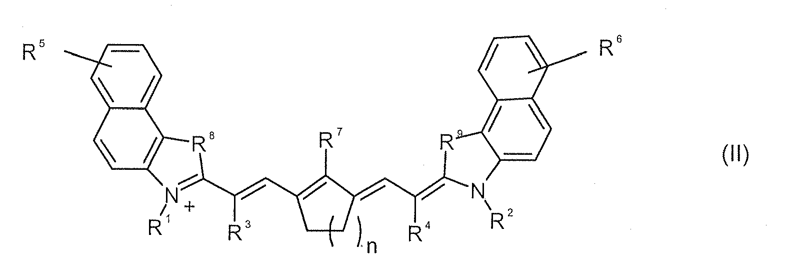 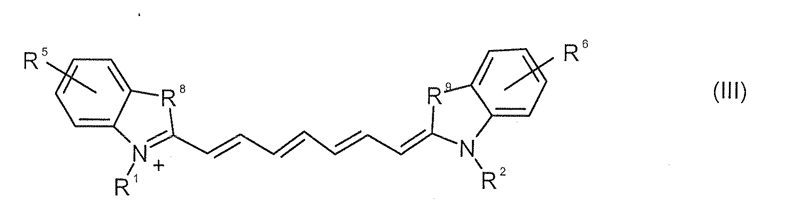 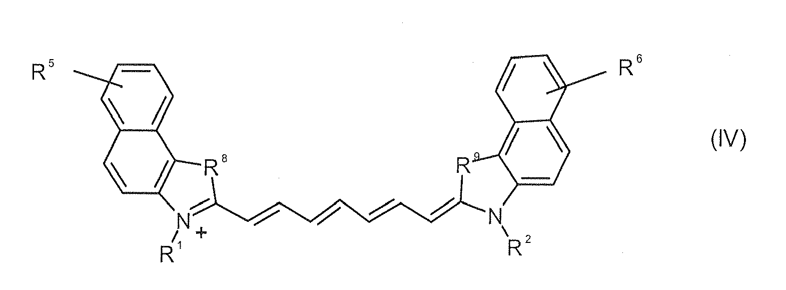 n is 1 or 2 and the radicals R¹ to R⁹ have the following meanings:
- R¹ and R², independently of one another, are a linear or branched, optionally further substituted alkyl or aralkyl radical having 1 to 20 carbon atoms,
- R³ and R⁴, independently of one another, are H or CN,
- R⁵ and R⁶, independently of one another, are one or more, identical or different substituents selected from the group consisting of -H, -F, -Cl, -Br, -I, -NO₂, -CN, -CF₃, -R¹, -OR¹, aryl- or -O-aryl,
- R⁷ is -H, -Cl, -Br, -I, -phenyl, -O-phenyl, - S-phenyl, -N(phenyl)₂, -pyridyl, a barbituric acid radical or a dimedone radical, it also being possible for the phenyl radicals to be further substituted,
- R⁸ and R⁹ independently of one another, are >C(CH₃)₂, -0-, -S- , > NR¹ or -CH=CH-,
and the anion Y^{m-} has the general formula [AR¹⁰ₖ]^{m-} with a polar, ionic head group A and k nonpolar groups R¹⁰, k is 1, 2 or 3 and m is 1 or 2, and the nonpolar groups R¹⁰, independently of one another, are selected from the group consisting of
o linear, branched or cyclic alkyl groups having 6 to 30 carbon atoms and
o alkylaryl groups of the general formula -aryl-R¹¹, where R¹¹ is a linear or branched alkyl group having 3 to 30 carbon atoms,
or the anion Y^{m-} is a borate anion of the general formulae (V) or (VI) 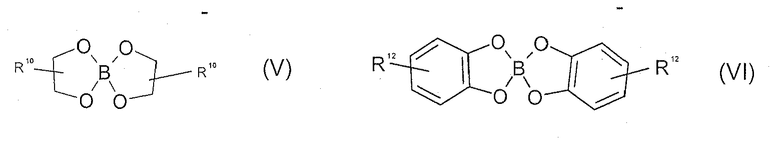 where R¹⁰ is as defined above and R¹² is at least one substituent selected from the group consisting of H and linear, cyclic or branched alkyl groups having 1 to 20 carbon atoms, and
in the radicals R¹⁰, R¹¹ and R¹², even nonneighboring carbon atoms may optionally be substituted by 0 atoms and/or the radicals R¹⁰, R¹¹ and R¹² may be completely or partly fluorinated, with the proviso that the nonpolar character of the groups is not substantially influenced thereby.

5. The printing ink according to claim 4, wherein the polar, ionic head group A is a monobasic or dibasic acid radical selected from the group consisting of -SO₃⁻, -OSO₃⁻, -COO⁻, -PO₃² , -OPO₃² or (-O) (-O)PO₂⁻.

6. The printing ink according to claim 4 or 5, wherein R¹⁰ is a linear, branched or cyclic alkyl group having 6 to 12 carbon atoms.

7. The printing ink according to claim 6, wherein R¹⁰ is a linear alkyl group.

8. The printing ink according to claim 4 or 5, wherein R¹¹ has 6 to 12 carbon atoms.

9. The printing ink according to claim 8, wherein R¹¹ is a linear alkyl group.

10. The printing ink according to any of claims 1 to 9, wherein the amount of the NIR absorber in the printing ink is from 0.05 to 4% by weight, based on the sum of all components of the ink.

11. The use of a printing ink according to any of claims 1 to 10 in printing processes in which the curing of the printing ink is promoted by using IR radiation sources whose wavelength is not resonant with the absorption wavelengths of water.

12. An NIR absorber consisting of a cyanine cation x⁺ and a corresponding anion ¹/ₘY^{m-}, the cation having a general formula selected from the group consisting of (I) to (IV) 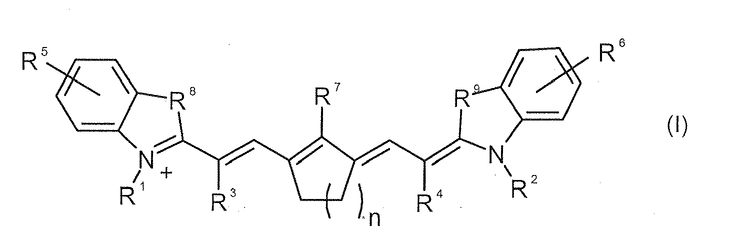 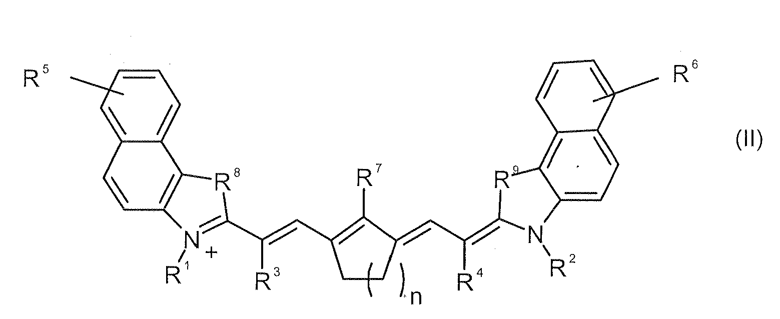 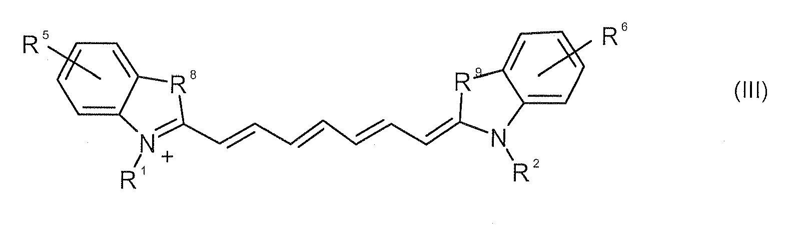 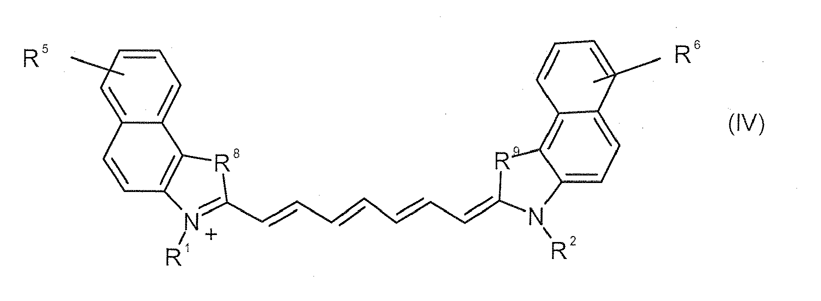 n is 1 or 2 and the radicals R¹ to R⁹ have the following meanings:
- R¹ and R², independently of one another, are a linear or branched, optionally further substituted alkyl or aralkyl radical having 1 to 20 carbon atoms,
- R³ and R⁴, independently of one another, are H or CN,
- R⁵ and R⁶ independently of one another, are one or more, identical or different substituents selected from the group consisting of -H, -F, - Cl, -Br, -I, -NO₂, -CN, -CF₃, -R¹, -OR¹, aryl-or -O-aryl,
- R⁷ is -H, -Cl, -Br, -I, -phenyl, -O-phenyl, - S-phenyl, -N(phenyl)₂, -pyridyl, a barbituric acid radical or a dimedone radical, it also being possible for the phenyl radicals to be further substituted,
- R⁸ and R⁹, independently of one another, are >C(CH₃)₂, -O-, -S-, > NR¹ or -CH=CH-,
and the anion Y^{m-} has the general formula [AR¹⁰ₖ] ^{m-} with a polar, ionic head group A and k nonpolar groups R¹⁰, k is 1, 2 or 3 and m is 1 or 2, and the nonpolar groups R¹⁰, independently of one another, are selected from the group consisting of
o linear, branched or cyclic alkyl groups having 6 to 30 carbon atoms and
o alkylaryl groups of the general formula -aryl-R¹¹, where R¹¹ is a linear or branched alkyl group having 3 to 30 carbon atoms, or
or the anion Y^{m-} is a borate anion of the general formulae (V) or (VI) 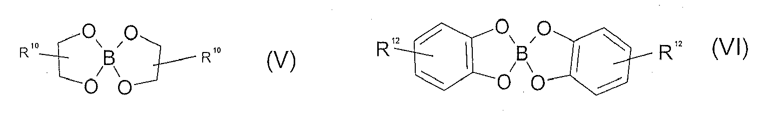 where R¹⁰ is as defined above and R¹² is at least one substituent selected from the group consisting of H and linear, cyclic or branched alkyl groups having 1 to 20 carbon atoms, and
in the radicals R¹⁰, R¹¹ and R¹², even nonneighboring carbon atoms may optionally be substituted by 0 atoms and/or the radicals R¹⁰, R¹¹ and R¹² may be completely or partly fluorinated, with the proviso that the nonpolar character of the group is not substantially influenced thereby.

13. The NIR absorber according to claim 12, wherein the monobasic or dibasic acid radical A is selected from the group consisting of -SO₃⁻, -OSO₃⁻, -COO⁻, - PO₃²⁻ , -OPO₃²⁻ or (-O) (-O) PO₂⁻.

14. The NIR absorber according to claim 12 or 13, wherein R¹⁰ is a linear or branched alkyl group having 6 to 12 carbon atoms.

15. The NIR absorber according to claim 14, wherein R¹⁰ is a linear alkyl group.

16. The NIR absorber according to claim 12 or 13, wherein R¹¹ has 6 to 12 carbon atoms.

17. The NIR absorber according to claim 16, wherein R¹¹ is a linear alkyl group.

## Revendications

1. Encres d'impression destinées à l'impression offset et/ou en relief, comprenant 5 à 45 % en poids d'au moins un solvant non polaire ayant un point d'ébullition allant de 200 à 320 °C, 20 à 70 % en poids de liant, 5 à 25 % en poids de colorant absorbant dans le domaine spectral visible, ainsi qu'un absorbeur NIR, qui ne présente essentiellement aucune absorption dans le domaine spectral visible, **caractérisées en ce que** la solubilité de l'absorbeur NIR dans l'encre d'impression est d'au moins 0,1 % en poids, par rapport à tous les constituants de l'encre d'impression, à la condition que la solubilité de l'absorbeur NIR soit supérieure ou égale à la concentration de l'absorbeur NIR dans l'encre d'impression.

2. Encres d'impression selon la revendication 1, **caractérisées en ce que** la solubilité de l'absorbeur NIR est d'au moins 0,2 % en poids.

3. Encres d'impression selon la revendication 1 ou 2, **caractérisées en ce que** l'absorbeur NIR est au moins un composé choisi parmi le groupe des cyanines, naphtalocyanines, squaraines et croconates.

4. Encres d'impression selon la revendication 3, **caractérisées en ce que** l'absorbeur NIR est un absorbeur ionique constitué d'un cation cyanine X⁺ et d'un anion correspondant 1/m Y^{m-}, où le cation cyanine présente une formule générale choisie parmi le groupe de (I) à (IV) : 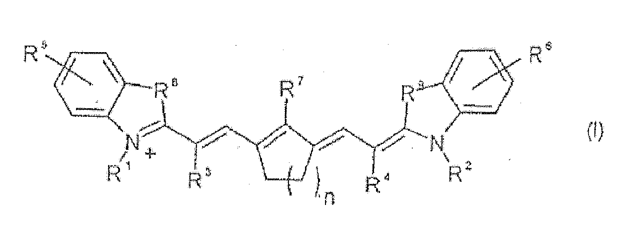 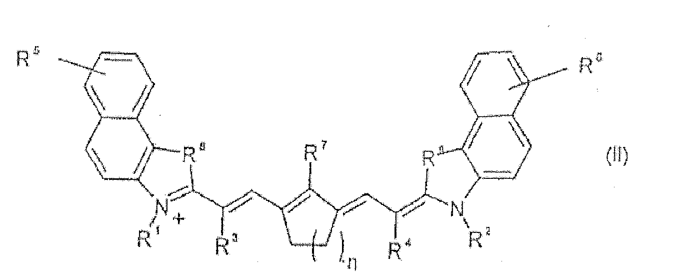 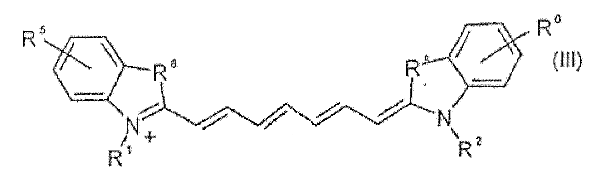 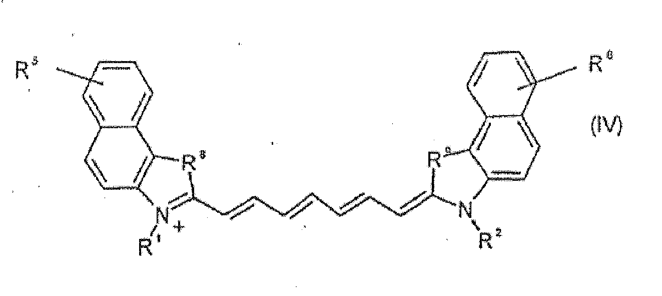
n représentant 1 ou 2 et les radicaux R¹ à R⁹ signifiant ce qui suit .
- R¹ et R ² indépendamment l'un de l'autre, un radical alkyle ou aralkyle, linéaire ou ramifié, le cas échéant davantage substitué, ayant 1 à 20 atomes de carbone,
- R³ et R⁴, indépendamment l'un de l'autre, H ou CN,
- R⁵ et R⁶, indépendamment l'un de l'autre, un ou plusieurs substituants, identiques ou différents, choisis parmi le groupe consistant en -H, -F, -Cl, -Br, -I, -NO₂, -CN, -CF₃, -R¹, -OR¹, aryle ou -0-aryle,
- R⁷ -H, -Cl, -Br, -I, -phényle, -O-phényle, -S-phényle, -N(phényl)₂, -pyridyle, un radical acide barbiturique ou un radical dimédone, où les radicaux phényle peuvent être également davantage substitués,
- R⁸ et R⁹, indépendamment l'un de l' autre, >C(CH₃)₂, -O-, -S-, >NR¹ ou -CH=CH-,
et où l'anion Y^{m-} présente la formule générale [AR¹⁰ₖ] ^{m-}, avec un groupe de tête A polaire, ionique, ainsi que k groupes non polaires R¹⁰, k représente un nombre parmi 1, 2 ou 3 et m 1 ou 2, et les groupes non polaires R¹⁰ sont choisis chacun indépendamment parmi le groupe :
∘ des groupes alkyle linéaires, ramifiés ou cycliques ayant 6 à 30 atomes de carbone, ainsi que
∘ des groupes aralkyle de la formule générale -aryl-R¹¹, où R¹¹ représente des groupes alkyle linéaires ou ramifiés ayant 3 à 30 atomes de carbone,
ou l'anion Y^{m-} est un anion borate de la formule générale (V) ou (VI) : 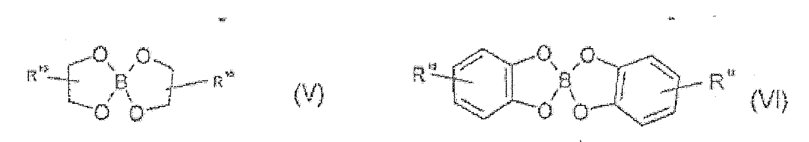 où R¹⁰ est défini comme ci-dessus et R¹² est au moins un substituant choisi parmi le groupe constitué de H ou des groupes alkyle linéaires, ramifiés ou cycliques ayant 1 à 20 atomes de carbone, et
où dans les radicaux R¹⁰, R¹¹ et R¹², des atomes de carbone non voisins peuvent également être substitués le cas échéant par des atomes 0 et/ou les radicaux R¹⁰, R¹¹ et R¹² peuvent être complètement ou partiellement fluorés, à la condition que le caractère non polaire des groupes ne soit ainsi pas essentiellement influencé.

5. Encres d'impression selon la revendication 4, **caractérisées en ce que** le groupe de tête A, polaire, ionique est un radical acide mono- ou bivalent choisi parmi le groupe constitué de -SO₃⁻, -OSO₃⁻, -COO⁻, -PO₃²⁻, -OPO₃²⁻ ou (-O)(-O)PO₂⁻.

6. Encres d'impression selon la revendication 4 ou 5, **caractérisées en ce que** R¹⁰ est un groupe alkyle linéaire, ramifié ou cyclique ayant 6 à 12 atomes de carbone.

7. Encres d'impression selon la revendication 6, **caractérisées en ce que** R¹⁰ est un groupe alkyle linéaire.

8. Encres d'impression selon la revendication 4 ou 5, **caractérisées en ce que** R¹¹ présente 6 à 12 atomes de carbone.

9. Encres d'impression selon la revendication 8, **caractérisées en ce que** R¹¹ est un groupe alkyle linéaire.

10. Encres d'impression selon l'une des revendications 1 à 9, **caractérisées en ce que** la quantité d'absorbeur NIR dans l'encre d'impression se situe dans l'intervalle allant de 0,05 à 4 % en poids, par rapport à la somme de tous les constituants de l'encre.

11. Utilisation d'une encre d'impression selon l'une des revendications 1 à 10 dans des procédés d'impression, dans lesquels le durcissement de l'encre d'impression est soutenu par l'utilisation de sources de rayonnement IR, dont la longueur d'onde n'est pas en résonance avec les longueurs d'onde d'absorption de l'eau.

12. Absorbeur NIR consistant en un cation cyanine X⁺ et en un anion correspondant 1/m Y^{m-}, où le cation présente une formule générale choisie parmi le groupe de (I) à (IV) : 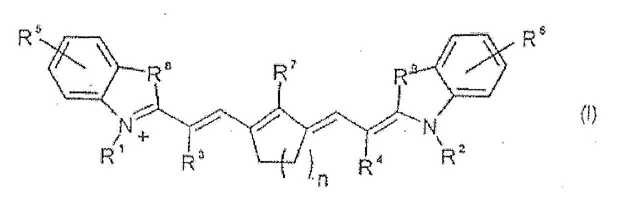 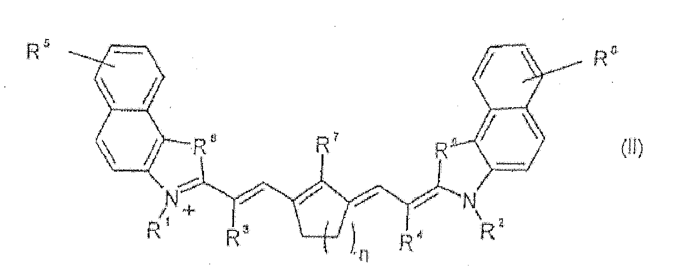 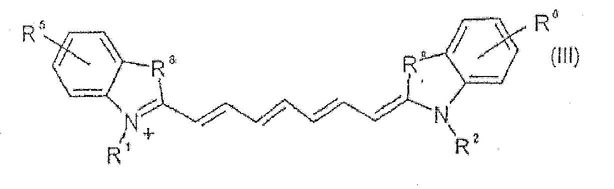 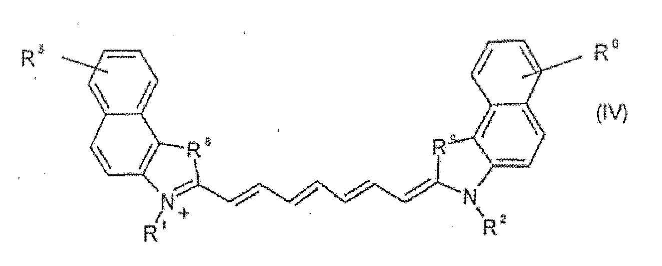
n représentant 1 ou 2 et les radicaux R¹ à R⁹ signifiant ce qui suit :
- R¹ et R², indépendamment l'un de l'autre, un radical alkyle ou aralkyle, linéaire ou ramifié, le cas échéant davantage substitué, ayant 1 à 20 atomes de carbone,
- R³ et R⁴, indépendamment l'un de l'autre, H ou CLIP,
- R⁵ et R⁶, indépendamment l' un de l' autre, un ou plusieurs substituants, identiques ou différents, choisis parmi le groupe consistant en -H, -F, -Cl, -Br, -I, -NO₂, -CN, -CF₃, -R¹, -OR¹, aryle ou -O-aryle,
- R⁷ -H, -Cl, -Br, -I, -phényle, -O-phényle, -S-phényle, -N(phényl)₂, -pyridyle, un radical acide barbiturique ou un radical dimédone, où les radicaux phényle peuvent être également davantage substitués,
- R⁸ et R⁹, indépendamment l'un de l'autre, >C(CH₃)₂, -O-, -S-, >NR¹ ou -CH=CH-,
et où l'anion Y^{m-} présente la formule générale [AR¹⁰ₖ] ^{m-}, avec un groupe de tête A polaire, ionique, ainsi que k groupes non polaires R¹⁰, k représente un nombre parmi 1, 2 ou 3 et m 1 ou 2, et les groupes non polaires R¹⁰ sont choisis chacun indépendamment parmi le groupe des :
∘ des groupes alkyle linéaires, ramifiés ou cycliques ayant 6 à 30 atomes de carbone, ainsi que
∘ des groupes aralkyle de la formule générale -aryl-R¹¹, où R¹¹ représente des groupes alkyle linéaires ou ramifiés ayant 3 à 30 atomes de carbone,
ou l'anion Y^{m-} est un anion borate de la formule générale (V) ou (VI) : 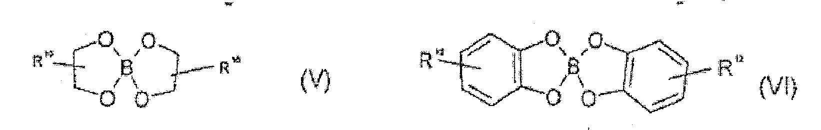 où R¹⁰ est défini comme ci-dessus et R¹² est au moins un substituant choisi parmi le groupe constitué de H ou des groupes alkyle linéaires, ramifiés ou cycliques ayant 1 à 20 atomes de carbone, et
où dans les radicaux R¹⁰, R¹¹ et R¹², des atomes de carbone non voisins peuvent également être substitués le cas échéant par des atomes 0 et/ou les radicaux R¹⁰, R¹¹ et R¹² peuvent être complètement ou partiellement fluorés, à la condition que le caractère non polaire des groupes ne soit ainsi pas essentiellement influencé.

13. Absorbeur NIR selon la revendication 12, **caractérisé en ce que** le radical acide mono- ou bivalent A est un groupement choisi parmi le groupe constitué de -SO₃⁻, -OSO₃⁻, -COO⁻, -PO₃²⁻, -OPO₃²⁻ ou (-O) (-O) PO₂⁻.

14. Absorbeur NIR selon la revendication 12 ou 13, **caractérisé en ce que** R¹⁰ est un groupe alkyle linéaire ou ramifié ayant 6 à 12 atomes de carbone.

15. Absorbeur NIR selon la revendication 14, **caractérisé en ce que** R¹⁰ est un groupe alkyle linéaire.

16. Absorbeur NIR selon la revendication 12 ou 13, **caractérisé en ce que** R¹¹ présente 6 à 12 atomes de carbone.

17. Absorbeur NIR selon la revendication 16, **caractérisé en ce que** R¹¹ est un groupe alkyle linéaire.
